# EUROPEAN PATENT SPECIFICATION

(11) **EP 2 698 846 B1**
(45) Date of publication and mention of the grant of the patent: **25.11.2015**
(21) Application number: 12807696.5
(22) Date of filing: 08.06.2012
(51) Int. Cl.: H01M 2/20, B60L 11/18, H01M 2/10

(54) **BATTERY WIRING MODULE**
BATTERIEVERKABELUNGSMODUL
MODULE DE CÂBLAGE DE BATTERIE

(30) Priority: 06.07.2011 JP 2011150093
(43) Date of publication of application: 19.02.2014
(73) Proprietor: AutoNetworks Technologies, Ltd., Yokkaichi-shi, Mie 510-8503 (JP); Sumitomo Wiring Systems, Ltd., Yokkaichi-shi, Mie 510-8503 (JP); Sumitomo Electric Industries, Ltd., Osaka-shi, Osaka 541-0041 (JP)
(72) Inventor: OKAMOTO Ryoya, Yokkaichi-shi Mie 510-8503 (JP); TAKATA Kensaku, Yokkaichi-shi Mie 510-8503 (JP); HIRAI Hiroki, Yokkaichi-shi Mie 510-8503 (JP); HIRAMITSU Hiroomi, Yokkaichi-shi Mie 510-8503 (JP)
(74) Representative: Horn Kleimann Waitzhofer Patentanwälte PartG mbB
(86) International application number: PCT/JP2012/064790
(87) International publication number: WO 2013/005526

(56) References cited:
- CN-Y- 201 378 602
- JP-A- 2000 223 095
- JP-A- 2000 223 098
- JP-A- 2001 229 982
- JP-A- 2008 166 008
- JP-A- 2010 033 913
- US-A1- 2003 108 789

## Description

### Technical Field

The present invention relates to a battery wiring module to be attached to a plurality of electric cells.

### Background Art

Conventionally, the battery wiring module described in Patent Document 1 is known as a battery wiring module for connecting a plurality of electric cells. This battery wiring module is prepared by installing a plurality of bus bars for connecting electrode terminals of adjoining electric cells on one plate that is made of synthetic resin. The electrodes of the plurality of electric cells are connected to one another with the bus bars by attaching the battery wiring module to an electric cell group in which the electric cells are arranged. A battery module including a battery wiring module attached to electric cells can be used as a driving source of vehicles such as electric vehicles and hybrid vehicles.

Patent document 2 discloses another battery wiring module known from prior art.

### Citation List

### Patent Documents

Patent Document 1: JP 11-120987A
Patent document 2: US 2003/108789 A1

### Summary of Invention

### Technical Problem

When a current flows through a bas bar, the bus bar generates heat. For this reason, the synthetic resin for forming a plate on which the bas bars are installed is required to be heat-resistant in some cases. For example, a relatively large current flows through the bas bar when the battery module is used as a driving source of an electric vehicle or a hybrid vehicle, and there is concern that a relatively large amount of heat is generated by the bus bar. Further, depending on the location in a vehicle where the battery module is installed, there is concern that the heat generated by the bus bars does not diffuse and is confined, and the temperature in the vicinity of the battery wiring module is locally high.

To solve the foregoing problem, it is conceivable to use fire-resistant synthetic resin. Thus, a battery wiring module has been expected to be highly heat-resistant and fire-resistant.

However, since fire-resistant synthetic resin is relatively expensive, a problem arises in that the manufacturing cost of the battery wiring module increases.

The present invention was finished based on the above-described situation, and its object is to provide a battery wiring module whose manufacturing cost is reduced.

### Solution to Problem

An aspect of the present invention is a battery wiring module to be attached to a plurality of electric cells, the electric cells each including a positive terminal and a negative terminal, the battery wiring module comprising: a bus bar that is made of metal and has a pair of connecting portions to be connected respectively to the positive terminal of one of the electric cells and the negative terminal of another of the electric cells; a bus bar case that is made of fire-resistant synthetic resin and in which the bus bar is accommodated; and a case holder that is made of general synthetic resin and by which the bus bar case is held..

According to the present invention, fire-resistant synthetic resin is used in the bus bar case in which the bus bar is accommodated, and accordingly, the heat-resistant property and the fire-resistant property of the battery wiring module in the case where the bus bar generates heat when a current flows therethrough can be improved. Further, since relatively inexpensive general synthetic resin is used in the case holder, the amount of use of fire-resistant synthetic resin, which is relatively expensive, can be reduced, and accordingly, the manufacturing cost of the battery wiring module can be reduced.

The following modes are preferable as the modes for carrying out the present invention.

It is preferable that one of the bus bar case and the case holder has a gap filling portion that comes into contact with the other of the bus bar case and the case holder and suppresses rattling between the bus bar case and the case holder when the bus bar case is held by the case holder, the gap filling portion projecting from the one of the bus bar case and the case holder toward the other of the bus bar case and the case holder.

According to the above-described mode, rattling between the bus bar case and the case holder can be suppressed, and accordingly, when the battery wiring module is attached to the electric cells, a relative shift in the positions of the case holder and the bus bar case can be suppressed. With this configuration, the connecting portions of the bus bar, the positive terminal and the negative terminal can be easily positioned, and accordingly, the efficiency of a task of attaching the battery wiring module to the electric cells can be improved.

It is preferable that the gap filling portion is formed in a rib shape that extends along an attaching direction in which the bus bar case is attached to the case holder.

According to the above-described mode, when the bus bar case is attached to the case holder, the other of the bus bar case and the case holder is guided by the gap filling portion that is formed in a rib shape on the one of the bus bar case and the case holder. With this configuration, the workability in attachment of the bus bar case to the case holder can be improved.

It is preferable that the pair of connecting portions are a pair of through holes that are formed to penetrate the bus bar and into each of which the positive terminal or the negative terminal is inserted, and one or both of the pair of through holes are formed to extend in an elongated manner in a direction in which the one electric cell and the other electric cell that are connected by the bus bar are arranged.

A manufacturing tolerance is set for the positive terminal and the negative terminal provided in each electric cell. Further, an attachment tolerance in the direction in which the electric cells are arranged is set for the arranged electric cells. When one electric cell and another electric cell are arranged, the manufacturing tolerance of the positive terminal and the negative terminal and the attachment tolerance between the one electric cell and the other electric cell are added together. For this reason, assuming that the connecting portions are through holes formed to penetrate the bus bar, there is concern that the positive terminal or the negative terminal cannot be caused to penetrate the through hole as a result of the tolerances being added together. In consideration of this concern, in the above-described mode, the through holes are formed to extend in an elongated manner in the direction in which the one electric cell and the other electric cell that are connected by the bus bar are arranged. With this configuration, even if the manufacturing tolerance of the positive terminal and the negative terminal and the attachment tolerance between the one electric cell and the other electric cell are added together, both the positive terminal and the negative terminal can be inserted into the respective through holes.

It is preferable that the case holder has a bottom wall, the bottom wall has a lock portion that is formed at a position on the inside of a side edge of the bottom wall, and the bus bar case is held by the case holder as a result of the lock portion and a lock receiving portion formed on the bus bar case elastically engaging with each other.

According to the above-described mode, the lock portion is formed at the position on the inside of the side edge of the bottom wall. Accordingly, even if the bottom wall is bent, the lock portion is harder to be bent than in the case where the lock portion is formed on the side edge of the bottom wall. As a result, even if the bottom wall is bent, the engagement between the lock portion and the lock receiving portion is hard to be released. With this configuration, the strength of attachment between the bus bar case and the case holder can be improved.

### Advantageous effects of Invention

According to the present invention, the manufacturing cost of a battery wiring module can be reduced.

### Brief Description of Drawings

FIG. 1 is a plan view showing a battery module in which a wiring module according to an embodiment of the present invention is attached to an electric cell group.
FIG. 2 is a plan view showing a bus bar.
FIG. 3 is an exploded perspective view showing the bus bar and a bus bar case.
FIG. 4 is a plan view showing the bus bar case.
FIG. 5 is a side view showing the bus bar case.
FIG. 6 is a perspective view showing a case holder.
FIG. 7 is a plan view showing the case holder.
FIG. 8 is a perspective view showing the wiring module.
FIG. 9 is a plan view showing the wiring module.
FIG. 10 is a cross-sectional view taken along line X-X in FIG. 9.
FIG. 11 is a partial enlarged plan view showing gap filling portions of the case holder.
FIG. 12 is a partial enlarged plan view showing a state where the gap filling portions are in contact with the bus bar case.

### Description of Embodiments

### Embodiments

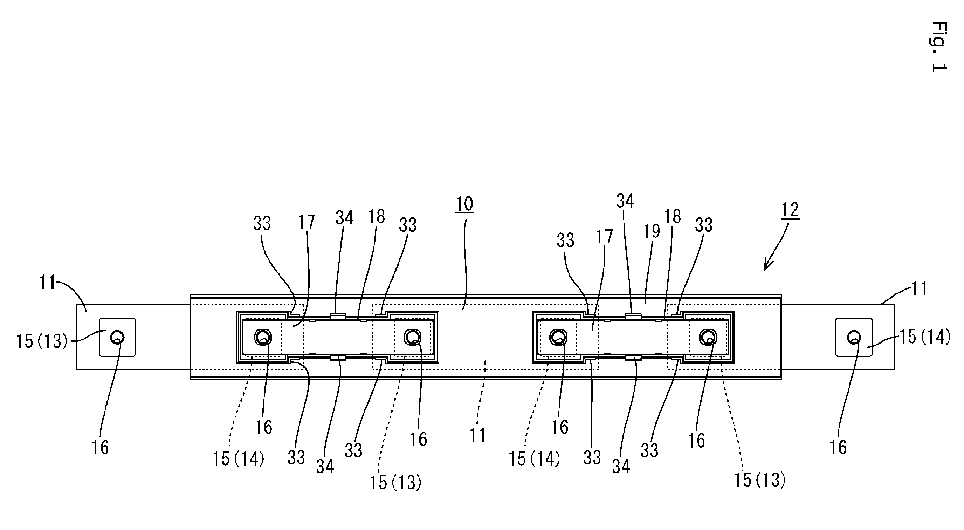

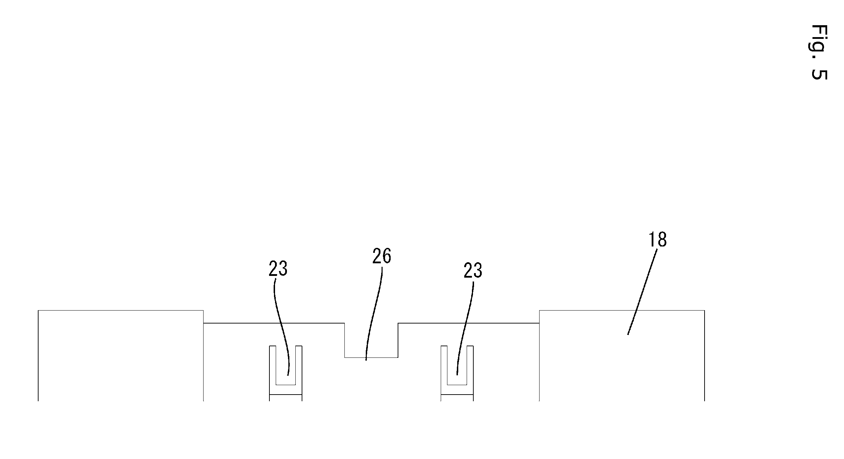

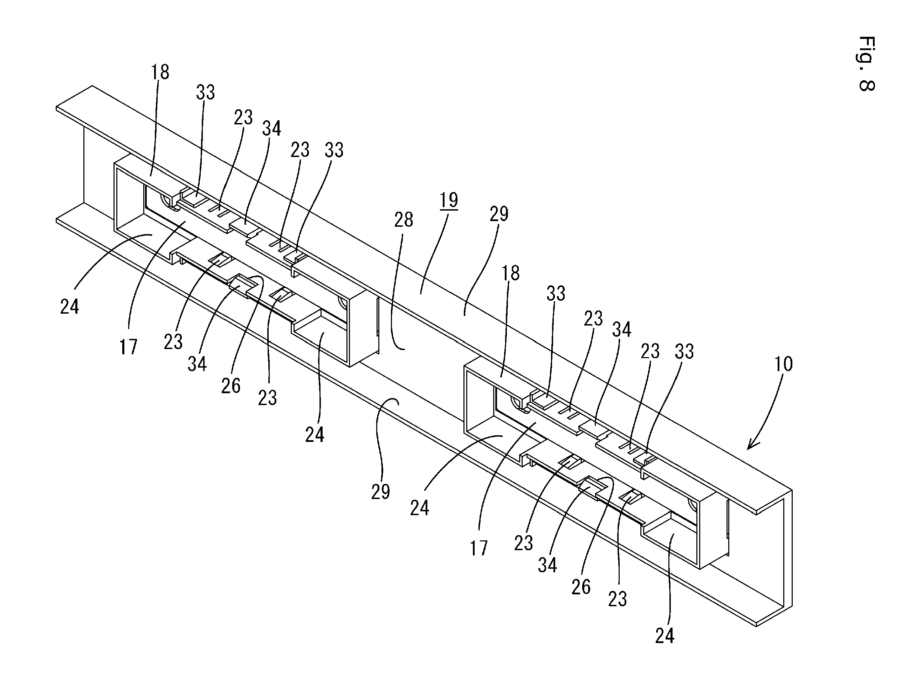

An embodiment of the present invention will be described with reference to FIGS. 1 to 12. A battery wiring module 10 according to the present embodiment is attached to an electric cell group including a plurality of (in the present embodiment, three) electric cells 11, constituting a battery module 12. This battery module 12 may be used as a driving source of a vehicle (not shown) such as an electric vehicle or a hybrid vehicle, for example. In the following description, the lower side and the upper side are those in FIG. 5. The left side and the right side are those in FIG. 1. Note that the aforementioned directions are used for the sake of convenience in the description of the embodiment, and do not limit the configuration of the battery wiring module 10 according to the present embodiment in any way.

### Electric cells 11

As shown in FIG. 1, the electric cells 11 each have a flat rectangular shape. A power generating element (not shown) is accommodated within the electric cell 11. A positive terminal 13 and a negative terminal 14 are formed at positions near respective ends on the top face of each electric cell 11 (i.e., on the proximal side in the direction of penetrating the page in FIG. 1). The positive terminal 13 and the negative terminal 14 are each provided with a metal terminal block 15. This terminal block 15 has a screw hole 16 that is formed to extend downward. A bolt (not shown) can be screwed into the screw hole 16. The electric cells 11 are fixed by holding members (not shown).

As shown in FIG. 1, in the present embodiment, the electric cells 11 are arranged in the left-right direction such that the short-side faces of the electric cells 11 face each other. The electric cells 11 are arranged such that the positive terminals 13 and the negative terminals 14 are adjacent to each other to the left and right. Note that the arrangement of the electric cells 11 is not limited to that in the present embodiment.

### Battery wiring module 10

The battery wiring module 10 includes a bus bar 17 that is made of metal and connects the positive terminal 13 of one of the electric cells 11 to the negative terminal 14 of another electric cell 11, a bus bar case 18 that is made of synthetic resin and in which the bus bar 17 is accommodated, and a case holder 19 that is made of synthetic resin and by which the bus bar case 18 is held.

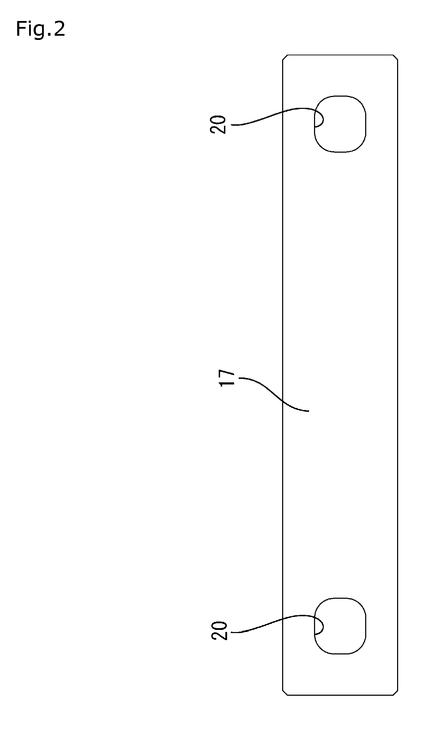

The bus bar 17 is made by pressing a metal plate into a predetermined shape. The metal that constitutes the bus bar 17 can be any type of metal such as copper, copper alloy, stainless steel, or aluminum, as needed. A plated layer (not shown) may be formed with any type of metal such as tin or nickel, as needed, on the surface of the bus bar 17. As shown in FIG. 2, the bus bar 17 has an elongated rectangular shape. A pair of terminal through holes 20 (which correspond to connecting portions), in which bolts to be screwed when the positive terminal 13 and the negative terminal 14 are connected to the bus bar 17 are inserted, are formed on positions near respective ends of the bus bar 17, penetrating the bus bar 17.

Both of the terminal through holes 20 are formed to extend in an elongated manner in the longitudinal direction of the bus bar 17 (i.e., in the left-right direction in FIG. 2). The positive terminal 13 and the negative terminal 14 are electrically connected to the bus bar 17 by the bolts being inserted into the respective terminal through holes 20 and thereafter screwed into the screw hole 16 of the positive terminal 13 and the screw hole 16 of the negative terminal 14.

### Bus bar case 18

The bus bar 17 is accommodated in the bus bar case 18 made of synthetic resin. The synthetic resin that constitutes the bus bar case 18 is fire-resistant synthetic resin that has a fire-resistant property. The fire-resistant synthetic resin may be known synthetic resin to which a known fire retardant is added. The synthetic resin is not particularly limited, and thermoplastic resin or thermoset resin may be used.

The thermoplastic resin may include high-density polyethylene, low-density polyethylene, straight chain low-density polyethylene, polypropylene, polyisoprene, polybutadiene, polystyrene, high-impact polystyrene, acrylonitrile-styrene resin (AS resin), acrylonitrile-butadiene-styrene resin (ABS resin), methyl methacrylate-butadiene-styrene resin (MBS resin), methyl methacrylate-acrylonitrile-butadiene-styrene resin (MABS resin), acrylonitrile-acrylic rubber-styrene resin (AAS resin), polymethyl acrylate, polymethyl metacrylate, polyphenylene sulfide, polyimide, polyetheretherketone, polysulfone, polyallylate, polyether ketone, polyether nitrile, polythioether sulfone, polyether sulfone, polybenzimidazole, polycarbodiimide, polyamidimide, polyetherimide, (aliphatic or aromatic) polyamide, liquid crystal polymer, polyurethane, polycarbonate, polyester (polyethylene terephthalate, polypropylene terephthalate, polybutylene terephthalate, polyethylene naphthalate, etc.), polyphenylene ether, a blend thereof, and the like.

The thermoset resin may include phenol resin, urea resin, melamine resin, epoxy resin, unsaturated polyester resin, and the like.

There is no particular limitation to fire retardant, and may include halogen compounds such as chlorinated paraffin, chlorinated polyethylene, tetrabromoethane, and tetrabromobisphenol A, phosphate esters such as tricresyl phosphate, cresyl diphenyl phosphate, triphenyl phosphate, and trioctyl phosphate, halogen-containing phosphate esters such as tris(chloroethyl)phosphate, bis(2,3-dibromopropyl)-2,3dichloropropyl-phosphate, and tris(2,3-dibromopropyl)-phosphate, and the like.

The fire-resistant synthetic resin may further contain a known flame retardant promoter. Regarding the flame retardant promoter, inorganic flame retardant promoters may include inorganic compounds such as magnesium hydroxide, hydrotalcite, and talc, and a surface-treated product thereof, for example. Organic flame retardant promoters may include melamine cyanurate, pentaerythritol, polytetrafluoroethylene, and the like, for example.

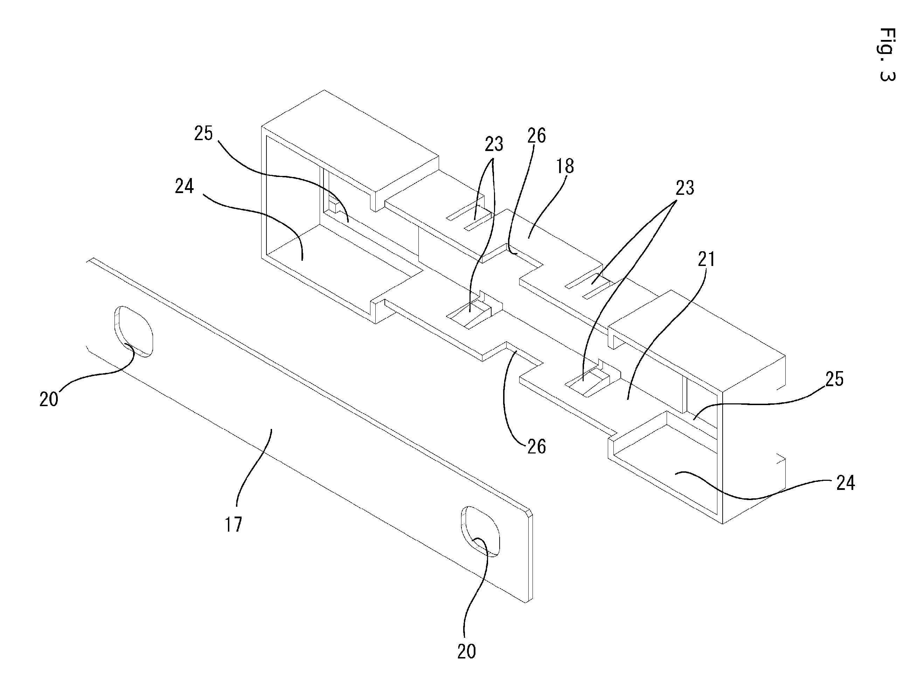

As shown in FIG. 3, the bus bar case 18 is provided with a bus bar accommodating portion 21 that extends in the left-right direction. The bus bar accommodating portion 21 opens upward, and is capable of accommodating the bus bar 17 therewithin. One bus bar 17 is accommodated in one bus bar case 18.

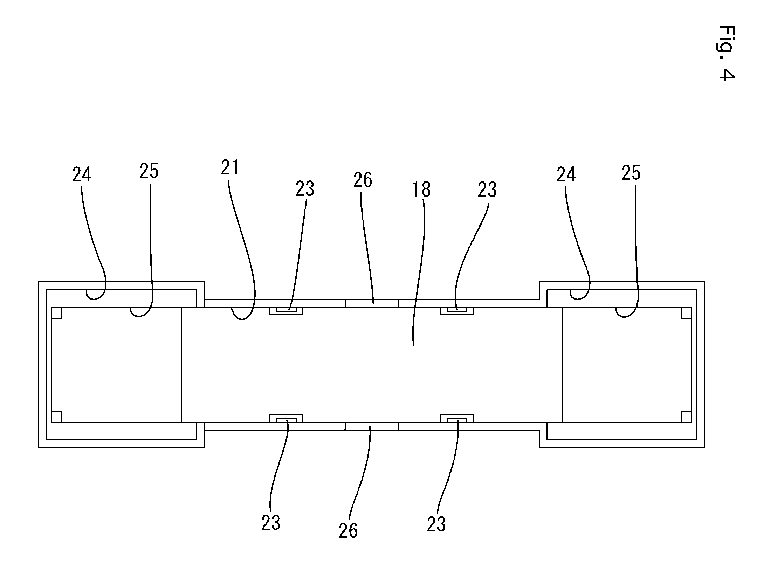

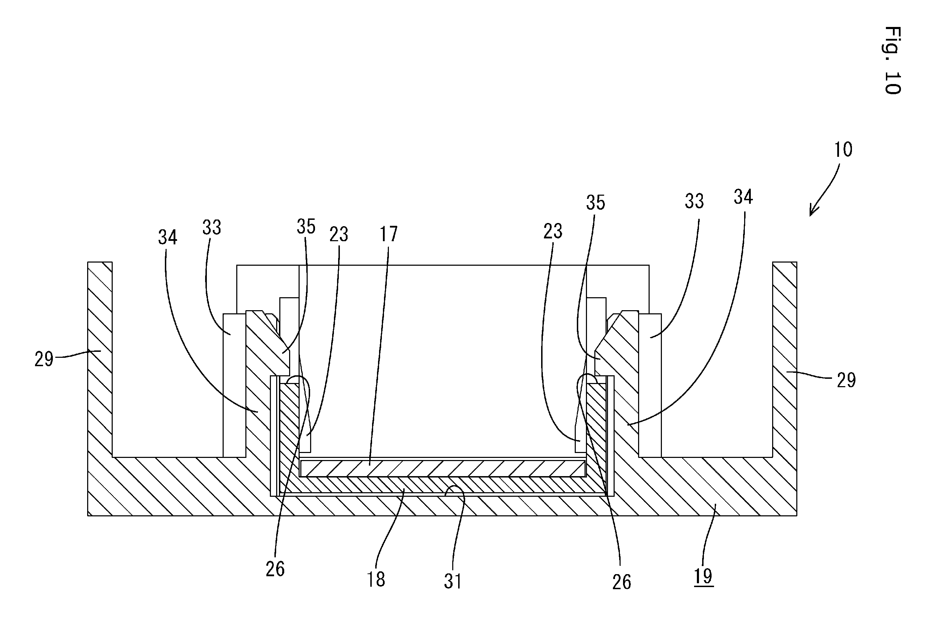

As shown in FIG. 4, the bus bar accommodating portion 21 is provided with a bottom wall on which the bus bar 17 is placed. Side walls are formed to stand upward on side edges of the bottom wall. Of the side walls, two side walls extending in the left-right direction (which is the left-right direction in FIG. 4) each have a plurality of bus bar locking portions 23 for restricting the bus bar 17 from being displaced upward by coming into contact, from above, with the bus bar 17 placed on the bottom wall. When the bus bar 17 is accommodated from above in the bus bar accommodating portion 21, side edges of the bus bar 17 come into contact with the bus bar locking portions 23. Then, the bus bar locking portions 23 undergo elastic deformation, and are deformed so as to be bent outward in the direction of thick part of the side walls. When the bus bar 17 is further moved downward, the bus bar locking portions 23 are deformed and restored to their original state, and restrict the bus bar 17 from being displaced upward by coming into contact with the top face of the bus bar 17 from above the bus bar 17 (see FIG. 10).

As shown in FIG. 4, the bus bar accommodating portion 21 is provided with a pair of wide width portions 24 that are formed to be wide in the direction that intersects the longitudinal direction of the bus bar accommodating portion 21, on the left and right ends of the bus bar accommodating portion 21. The bottom of each wide width portion 24 has a through hole 25 to be penetrated by the bolt (not shown) that is to be screwed into the screw hole 16 of the terminal block 15. These wide width portions 24 facilitate the task of fitting a jig used for bolt-tightening to the bolt head when the bolt is screwed into the screw hole 16.

As shown in FIG. 5, the side walls of the bus bar accommodating portion 21 each have a lock receiving portion 26 that is formed to be dented downward and locked with the case holder 19, at a substantially middle portion in the left-right direction (which is the left-right direction in FIG. 5).

### Case holder 19

The bus bar case 18 is held by the case holder 19 made of synthetic resin. The synthetic resin that constitutes the bus bar case 18 is known general synthetic resin. There is no particular limitation to general synthetic resin, and thermoplastic resin or thermoset resin may be used.

The thermoplastic resin may include high-density polyethylene, low-density polyethylene, straight chain low-density polyethylene, polypropylene, polyisoprene, polybutadiene, polystyrene, high-impact polystyrene, acrylonitrile-styrene resin (AS resin), acrylonitrile-butadiene-styrene resin (ABS resin), methyl methacrylate-butadiene-styrene resin (MBS resin), methyl methacrylate-acrylonitrile-butadiene-styrene resin (MABS resin), acrylonitrile-acrylic rubber-styrene resin (AAS resin), polymethyl acrylate, polymethyl metacrylate, polyphenylene sulfide, polyimide, polyetheretherketone, polysulfone, polyallylate, polyether ketone, polyether nitrile, polythioether sulfone, polyether sulfone, polybenzimidazole, polycarbodiimide, polyamidimide, polyetherimide, (aliphatic or aromatic) polyamide, liquid crystal polymer, polyurethane, polycarbonate, polyester (polyethylene terephthalate, polypropylene terephthalate, polybutylene terephthalate, polyethylene naphthalate, etc.), polyphenylene ether, a blend thereof, and the like.

The thermoset resin may include phenol resin, urea resin, melamine resin, epoxy resin, unsaturated polyester resin, and the like.

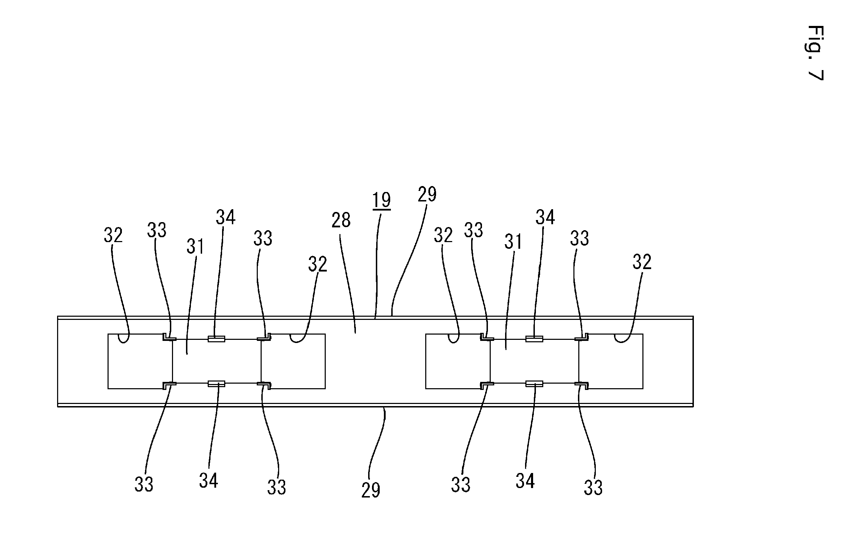

As shown in FIG. 7, the case holder 19 has a bottom wall 28 that has a substantially rectangular shape elongated in the left-right direction (which is the left-right direction in FIG. 7), and a pair of side walls 29 that project upward (i.e., toward the proximal side in the direction of penetrating the page in FIG. 7) from long-side edges among the side edges of the bottom wall 28.

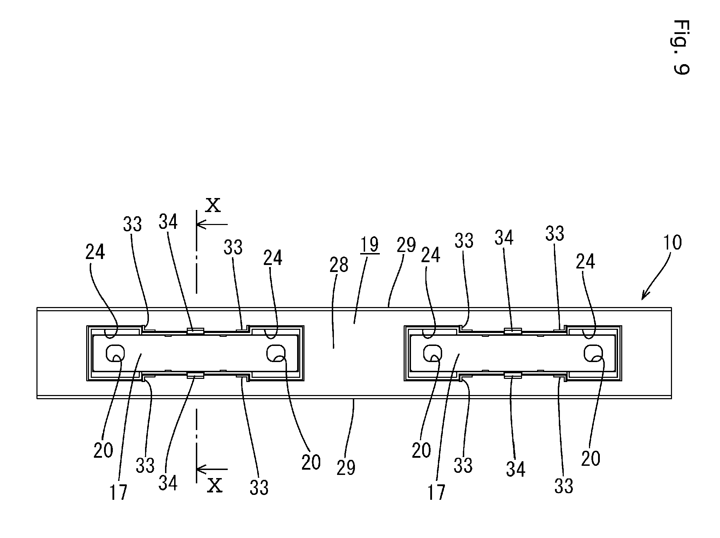

As shown in FIG. 9, two bus bar cases 18 that are arranged in the left-right direction are attached to one case holder 19.

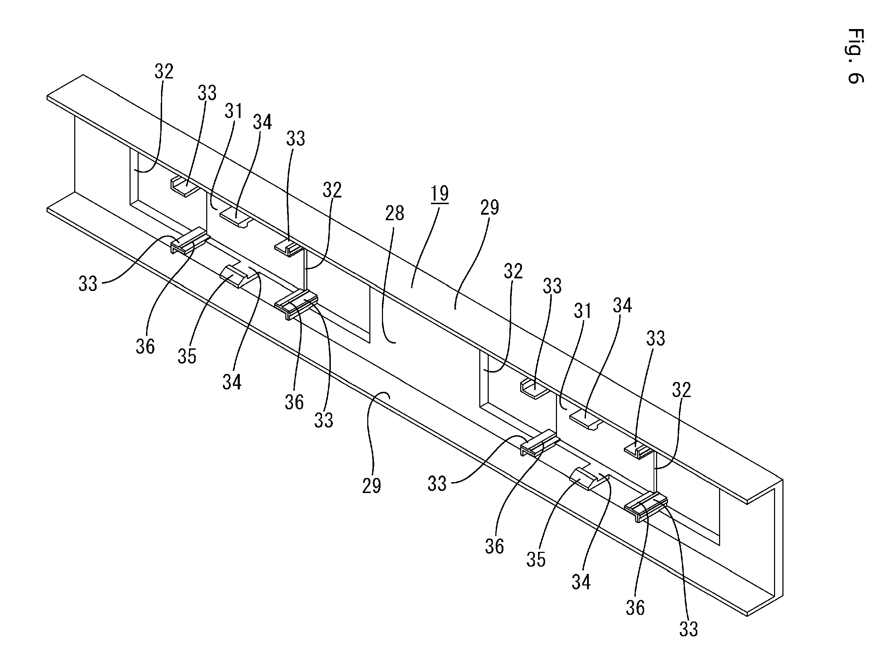

As shown in FIG. 6, the bottom wall 28 of the case holder 19 has two recess portions 31 that are formed at portions on which the bus bar cases 18 are placed. The bottom wall 28 of the case holder 19 also has through holes 32 into which the bolts for connecting the electric cells 11 to the bus bar 17 are inserted, on both the left and right sides of the respective recess portions 31. The recess portions 31 each form a rectangular shape as viewed from above. Upright walls 33 that stand upward from the bottom wall 28 are formed at four corners of each recess portion 31. The upright walls 33 are formed at positions on the inside of the long-side edges of the bottom wall 28.

As shown in FIG. 7, the upright walls 33 are each formed to be bent in an L-shape as viewed from above. The bottom wall 28 of the case holder 19 has lock portions 34 that stand upward and are capable of undergoing elastic deformation in their thickness direction, at a substantially middle portion in the left-right direction (which is the left-right direction in FIG. 7) of the recess portions 31. The upper end of each lock portion 34 has a locking nail 35 that is formed to project inward in the short-side direction (which is the up-down direction in FIG. 7) of the case holder 19.

As shown in FIG. 10, the locking nails 35 of the lock portions 34 are locked, from above, with the upper edges of the lock receiving portions 26 of the bus bar case 18, and as a result, the bus bar case 18 is restricted from being displaced upward, and the bus bar case 18 can be attached to the case holder 19.

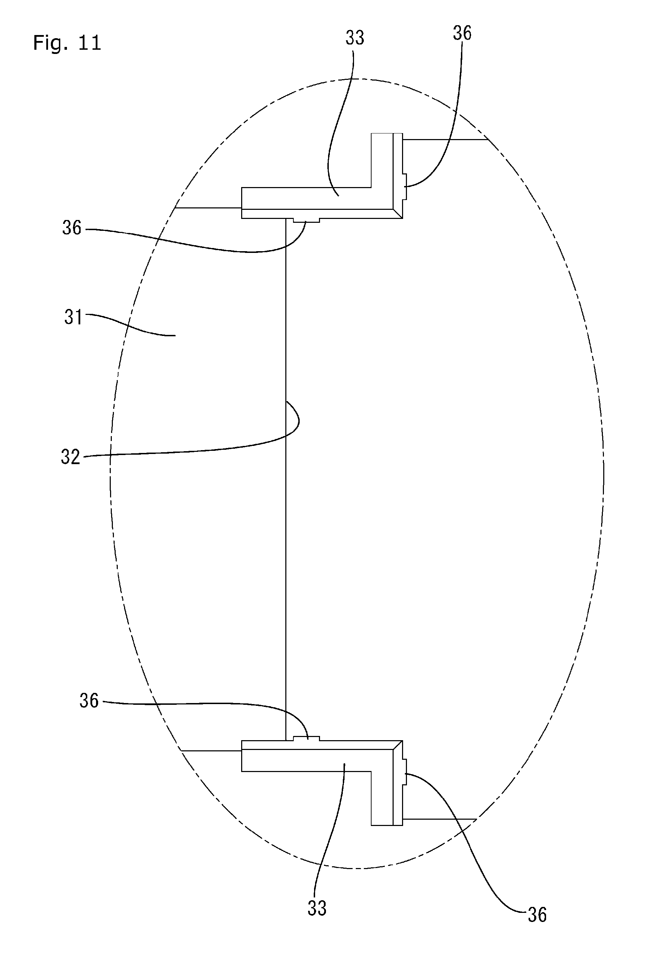

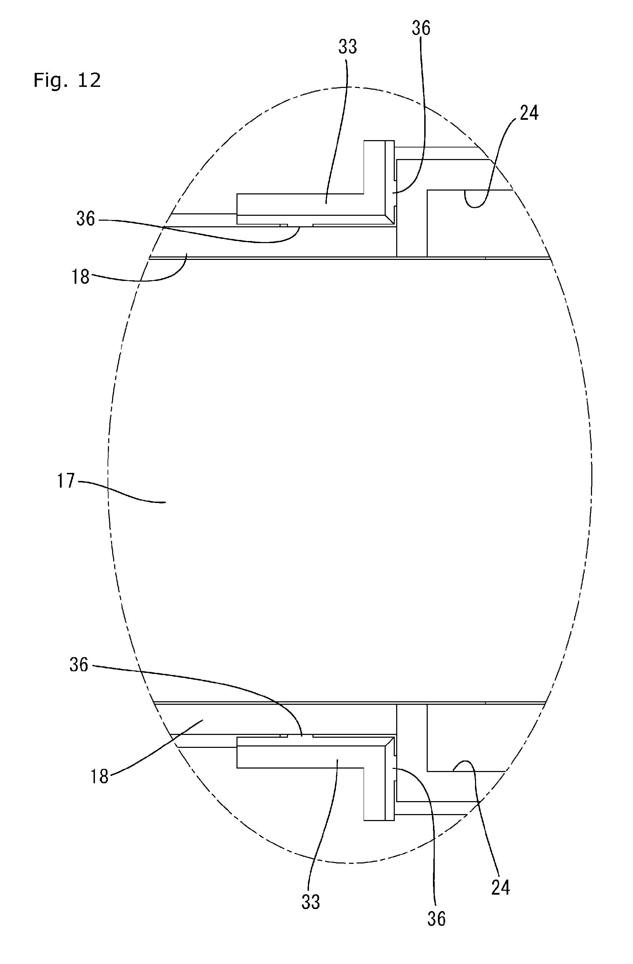

As shown in FIGS. 11 and 12, among the wall surfaces of the upright walls 33, the surfaces opposed to the bus bar case 18 when the bus bar case 18 is attached to the case holder 19 each have a plurality of gap filling portions 36 that are formed to project toward the bus bar case 18. The gap filling portions 36 are each formed in a rib shape elongated in the direction (in the present embodiment, the up-down direction) in which the bus bar case 18 is attached to the case holder 19. These gap filling portions 36 fill gaps between the case holder 19 and the bus bar case 18 by coming into contact with the bus bar case 18 when the bus bar case 18 is attached to the case holder 19 (see FIG. 12). Thus, rattling between the case holder 19 and the bus bar case 18 is suppressed.

The upright walls 33 are formed in a shape that simulates the outer shape of one or both of the side walls and the wide width portions 24 of the bus bar case 18. In the present embodiment, the upright walls 33 are formed substantially in an L-shape as viewed from above, so as to follow the shape of portions to which the side walls and the wide width portions 24 of the bus bar case 18 are connected.

The dimension of projection of the side walls 29 of the case holder 19 from the bottom wall 28 of the case holder 19 is set higher than the dimension of projection of the bus bar case 18 in the state where the bus bar case 18 is attached to the case holder 19, from the bottom wall 28 of the case holder 19 (see FIG. 10).

### Attaching process

An example of a process of attaching the battery wiring module 10 according to the present embodiment will be described below. Note that the process of attaching the battery wiring module 10 is not limited to that described below.

Initially, the bus bar 17 is formed by pressing a metal plate into a predetermined shape. Next, the bus bar 17 is accommodated, from above, in the bus bar accommodating portion 21 of the bus bar case 18 that is made of fire-resistant synthetic resin. Then, the side edges of the bus bar 17 come into contact with the bus bar locking portions 23 from above. When the bus bar 17 is further pressed downward, the bus bar locking portions 23 undergo elastic deformation, and are deformed so as to be bent outward in the direction of thick part of the side walls of the bus bar case 18. When the bus bar 17 is further moved downward, the bus bar locking portions 23 are deformed and restored to their original state, and restrict the bus bar 17 from being displaced upward by coming into contact with the top face of the bus bar 17 from above the bus bar 17. Thus, the bus bar 17 is held within the bus bar accommodating portion 21.

Subsequently, the bus bar case 18 is brought close to the case holder 19 from thereabove in an orientation where the lock receiving portions 26 of the bus bar case 18 are at positions corresponding to those of the lock portions 34 of the case holder 19. Then, the bottom wall of the case holder 19 comes into contact with the upper end of the lock portions 34 from above. When the case holder 19 is further pressed downward, the lock portions 34 undergo elastic bending deformation. When the case holder 19 is further moved downward, the gap filling portions 36 that project from the upright walls 33 come into contact with the case holder 19. Since the gap filling portions 36 are formed to extend in the up-down direction, the case holder 19 is guided by the gap filling portions 36 and moves downward. Further, as a result of the gap filling portions 36 each being formed in a rib shape, a frictional force generated between the upright walls 33 and the case holder 19 is reduced, and accordingly, a force required for attaching the bus bar case 18 to the case holder 19 can be reduced.

When the bus bar case 18 is further moved downward, the lock portions 34 are deformed and restored to their original state. Then, the locking nails 35 of the lock portions 34 are locked with the upper edges of the lock receiving portions 26 from above, and as a result, the bus bar case 18 is restricted from being displaced upward. Thus, the bus bar case 18 is attached to the case holder 19, and the battery wiring module 10 is finished.

The above-described battery wiring module 10 is attached from above to the electric cell group in which the electric cells 11 are arranged. At this time, the bolts are inserted into the terminal through holes 20 of the bus bar 17. A shift in the pitch between the adjoining terminal blocks 15 is absorbed by the terminal through holes 20 that are locked in an elongated manner. Thereafter, the bolts are screwed into the screw holes 16 to connect the bus bar 17 to the positive terminal 13 and the negative terminal 14. Thus, the battery module 12 is finished.

### Effect of the Embodiment

Subsequently, the effect of the present embodiment will be described. Since the bus bar case 18 for accommodating the bus bar 17 is made of fire-resistant synthetic resin in the present embodiment, the heat-resistant property and the fire-resistant property of the battery wiring module 10 in the case where the bus bar 17 generates heat when a current flows therethrough can be improved. Further, since the case holder 19 is made of relatively inexpensive general synthetic resin, the amount of use of fire-resistant synthetic resin, which is relatively expensive, can be reduced, and accordingly, the manufacturing cost of the battery wiring module 10 can be reduced.

Further, in the present embodiment, the attaching walls of the case holder 19 have the gap filling portions 36 that come into contact with the case holder 19 and suppress rattling between the bus bar case 18 and the case holder 19 when the bus bar case 18 is held by the case holder 19, and these gap filling portions 36 project toward the bus bar case 18 from the case holder 19. Thus, rattling between the bus bar case 18 and the case holder 19 can be suppressed, and accordingly, when the battery wiring module 10 is attached to the electric cells 11, a relative shift in the positions of the case holder 19 and the bus bar case 18 can be suppressed. Thus, the terminal through holes 20 of the bus bar 17, the positive terminal 13 and the negative terminal 14 can be easily positioned, and accordingly, the efficiency of a task of attaching the battery wiring module 10 to the electric cells 11 can be improved.

Further, in the present embodiment, the gap filling portions 36 are each formed in a rib shape that extends along the attaching direction in which the bus bar case 18 is attached to the case holder 19. When the bus bar case 18 is attached to the case holder 19, the case holder 19 is guided by the gap filling portions 36 formed to extend in a rib shape on the upright walls 33 of the bus bar case 18. Thus, the workability in attachment of the bus bar case 18 to the case holder 19 can be improved.

In the present embodiment, a manufacturing tolerance is set for the positive terminal 13 and the negative terminal 14 provided in each electric cell 11. Further, an attachment tolerance in the direction in which the electric cells 11 are arranged is set for the arranged electric cells 11. When one electric cell 11 and another electric cell 11 are arranged, the manufacturing tolerance of the positive terminal 13 and the negative terminal 14 and the attachment tolerance between the one electric cell 11 and the other electric cell 11 are added together. For this reason, there is concern that the bolts to be screwed into the positive terminals 13 or the negative terminals 14 cannot be caused to penetrate the through holes 25 of the bus bar 17. In consideration of this concern, in the above-described present embodiment, the through holes 25 are formed to extend in an elongated manner in the direction in which the one electric cell 11 and the other electric cell 11 that are connected by the bus bar 17 are arranged. As a result, even if the manufacturing tolerance of the positive terminal 13 and the negative terminal 14 and the attachment tolerance between the one electric cell 11 and the other electric cell 11 are added together, the bolts to be screwed to the positive terminal 13 and the negative terminal 14 can be inserted into the respective through holes 25.

According to the present embodiment, the lock portions 34 are formed at the positions on the inside of the side edges of the bottom wall 28 of the case holder 19, and accordingly, the lock portions 34 are relatively hard to be bent even if the bottom wall 28 is bent. As a result, even if the bottom wall 28 is bent, the engagement between the lock portions 34 and the lock receiving portions 26 formed on the bus bar case 18 is hard to be released. Thus, the strength of attachment between the bus bar case 18 and the case holder 19 can be improved.

In the present embodiment, in the state where the bus bar case 18 is attached to the case holder 19, the height dimension of projection of the side walls 29 of the case holder 19 from the bottom wall 28 is set higher than the height dimension of projection from the bottom wall 28. With these side walls 29 of the case holder 19, collision between the bus bar case 18 and a foreign object can be suppressed.

### Other Embodiments

The present invention is not limited to the embodiment described in the above description and the drawings, and the following embodiments are also embraced in the technical scope of the present invention, for example.
(1) Although the present embodiment described the configuration in which the gap filling portions 36 are formed on the upright walls 33 of the case holder 19, a configuration is possible in which the gap filling portions are formed on the bus bar case 18. Further, a configuration is also possible in which the gap filling portions are formed on both the case holder 19 and the bus bar case 18. In this case, a configuration is possible in which the gap filling portions formed on the case holder 19 come into contact with the bus bar case 18, and the gap filling portions formed on the bus bar case 18 come into contact with the case holder 19, and a configuration is also possible in which the gap filling portions formed on the case holder 19 come into contact with the gap filling portions formed on the bus bar case 18.
(2) Although the pair of connecting portions formed in the bus bar 17 are both elongated holes in the present embodiment, this need not be the case. One of the pair of through holes 25 may be an elongated hole while the other may be a round hole, and both of the pair of through holes 25 may be round holes. Alternatively, the connecting portions may be U-shaped grooves formed by cutting out the side edges of the bus bar 17.
(3) Although the present embodiment described the configuration in which two bus bar cases 18 are held by one case holder 19, this need not be the case. A configuration is possible in which one bus bar case 18 is held by one case holder 19, and a configuration is also possible in which three or more bus bar cases 18 are held by one case holder 19.
(4) Although the present embodiment described the configuration in which the lock portions 34 are formed to stand up on the bottom wall 28 of the case holder 19, this need not be the case, and a configuration is possible in which the lock portions 34 are formed on the side walls of the bus bar case 18.
(5) Although the gap filling portions 36 each have a rib shape with a rectangular cross-sectional shape in the present embodiment, this need not be the case, and they may have a rib shape with a semi-circular cross-sectional shape. Further, the gap filling portions 36 may be formed in a cylindrical shape or a prism shape. Further, the gap filling portions 36 may have a shape that projects in a semi-sphere shape. Thus, the gap filling portions 36 may be formed in an arbitrary shape as needed.
(6) Although the present embodiment described the configuration in which one bus bar accommodating portion 21 is formed in one bus bar case 18, this need not be the case, and a configuration is possible in which two or more bus bar accommodating portions 21 are formed in one bus bar case 18.
(7) The gap filling portions 36 may be omitted.
(8) Although the present embodiment described the configuration in which the bus bar case 18 and the case holder 19 are attached to each other as a result of the lock portions 34 engaging with the lock receiving portions 26, this need not be the case, and the bus bar case 18 and the case holder 19 may be attached to each other with screws. Alternatively, a configuration is possible in which they are adhered to each other through an adhesive layer formed between the bus bar case 18 and the case holder 19, and a configuration is also possible in which they are attached to each other by thermally welding the bus bar case 18 and the case holder 19. Thus, the bus bar case 18 and the case holder 19 may be attached to each other using an arbitrary method as needed.
(9) Although the present embodiment described the configuration in which the battery wiring module 10 is attached to three electric cells 11, this need not be the case, and a configuration is also possible in which it is attached to four or more electric cells 11.
(10) The dimension of projection of the side walls of the case holder 19 from the bottom wall 28 of the case holder 19 may be set lower than the dimension of projection of the bus bar case 18 in the state where the bus bar case 18 is attached to the case holder 19 from the bottom wall 28 of the case holder 19. Alternatively, the side walls 29 of the case holder 19 may be omitted.

### List of Reference Numerals

- 10: battery wiring module
- 11: electric cell
- 13: positive terminal
- 14: negative terminal
- 17: bus bar
- 18: bus bar case
- 19: case holder
- 20: terminal through hole (connecting portion)
- 26: lock receiving portion
- 28: bottom wall
- 29: side wall
- 34: lock portion
- 36: gap filling portion

## Claims

1. A battery wiring module (10) to be attached to a plurality of electric cells (11), the electric cells (11) each including a positive terminal (13) and a negative terminal (14), the battery wiring module (10) comprising:
a bus bar (17) that is made of metal and has a pair of connecting portions to be connected respectively to the positive terminal (13) of one of the electric cells (11) and the negative terminal (14) of another of the electric cells (11);and
a case holder (19) that is made of general synthetic resin;
**characterized by** a bus bar case (18) that is made of fire-resistant synthetic resin and in which the bus bar (17) is accommodated, the bus bar case (18) being held by the case holder (19).

2. The battery wiring module (10) according to claim 1,
wherein one of the bus bar case (18) and the case holder (19) has a gap filling portion (36) that comes into contact with the other of the bus bar case (18) and the case holder (19) and suppresses rattling between the bus bar case (18) and the case holder (19) when the bus bar case (18) is held by the case holder (19), the gap filling portion (36) projecting from the one of the bus bar case (18) and the case holder (19) toward the other of the bus bar case (18) and the case holder (19).

3. The battery wiring module (10) according to claim 2,
wherein the gap filling portion (36) is formed in a rib shape that extends along an attaching direction in which the bus bar case (18) is attached to the case holder (19).

4. The battery wiring module (10) according to any one of claims 1 to 3,
wherein the pair of connecting portions are a pair of through holes that are formed to penetrate the bus bar (17) and into each of which the positive terminal (13) or the negative terminal (14) is inserted, and one or both of the pair of through holes are formed to extend in an elongated manner in a direction in which the one electric cell (11) and the other electric cell (11) that are connected by the bus bar (17) are arranged.

5. The battery wiring module (10) according to any one of claims 1 to 4, wherein the case holder (19) has a bottom wall (28), the bottom wall (28) has a lock portion (34) that is formed at a position on the inside of a side edge of the bottom wall (28), and the bus bar case (18) is held by the case holder (19) as a result of the lock portion (34) and a lock receiving portion (26) formed on the bus bar case (18) elastically engaging with each other.

## Patentansprüche

1. Batterieverkabelungsmodul (10), welches geeignet ist, an einer Mehrzahl von elektrischen Zellen (11) angebracht zu werden, wobei die elektrischen Zellen (11) jeweils einen positiven Anschluss (13) und einen negativen Anschluss (14) umfassen, und das Batterieverkabelungsmodul (10) Folgendes umfasst:
eine Sammelschiene (17), die aus einem Metall gebildet ist und ein Paar von Verbindungsabschnitten aufweist, die respektive mit dem positiven Anschluss (13) einer der elektrischen Zellen (11) und dem negativen Anschluss (14) einer anderen der elektrischen Zellen (11) verbindbar sind;
einen Gehäusehalter (19), der aus einem üblichen Kunstharz gebildet ist,
**gekennzeichnet durch** ein Sammelschienengehäuse (18), das aus einem feuerbeständigen Kunstharz gebildet ist, und in dem die Sammelschiene (17) aufgenommen ist, wobei das Sammelschienengehäuse (18) von dem Gehäusehalter (19) festgehalten wird.

2. Batterieverkabelungsmodul (10) nach Anspruch 1,
wobei ein Element aus Sammelschienengehäuse (18) und Gehäusehalter (19) einen lückenfüllenden Abschnitt (36) aufweist, der jeweils mit dem anderen Element aus Gehäusehalter (19) und Sammelschienengehäuse (18) in Berührung kommt und, wenn das Sammelschienengehäuse (18) von dem Gehäusehalter (19) festgehalten ist, ein Klappern zwischen dem Sammelschienengehäuse (18) und dem Gehäusehalter (19) unterdrückt, wobei der lückenfüllende Abschnitt (36) aus dem einen Element aus Sammelschienengehäuse (18) und Gehäusehalter (19) jeweils in Richtung des anderen Elements aus Gehäusehalter (19) und Verteilergehäuse (18) herausragt.

3. Batterieverkabelungsmodul (10) nach Anspruch 2,
wobei der lückenfüllende Abschnitt (36) in einer Rippenform ausgebildet ist, die sich entlang einer Anbringungsrichtung ausdehnt, in welcher das Sammelschienengehäuse (18) an dem Gehäusehalter (19) angebracht ist.

4. Batterieverkabelungsmodul (10) nach einem der Ansprüche 1 bis 3,
wobei das Paar von Verbindungsabschnitten ein Paar von Durchgangslöchern ist, wobei die Durchgangslöcher durch die Sammelschiene (17) hindurch geführt sind, und in jedes Durchgangsloch der positive Anschluss (13) oder der negative Anschluss (14) eingeführt ist, und eines oder beide Durchgangslöcher des Paares von Durchgangslöchern sich länglich in einer Richtung ausdehnen, in welcher die eine elektrische Zelle (11) und die andere elektrische Zelle (11), die über die Sammelschiene miteinander verbunden sind, angeordnet sind.

5. Das Batterieverkabelungsmodul (10) nach einem der Ansprüche 1 bis 4,
wobei der Gehäusehalter (19) eine Bodenwand (28) aufweist, wobei die Bodenwand (28) einen Verriegelungsabschnitt (34) aufweist, der an einer Stelle an der Innenseite einer Seitenkante der Bodenwand (28) ausgebildet ist, und das Sammelschienengehäuse (18) von dem Gehäusehalter (19) festgehalten wird, indem der Verriegelungsabschnitt (34) und ein verriegelungsaufnehmender Abschnitt (26), der an dem Sammelschienengehäuse (18) ausgebildet ist, elastisch ineinander eingreifen.

## Revendications

1. Module de câblage de batterie (10) destiné à être fixé à une pluralité de cellules de battérie (11), les cellules de battérie (11) comprenant chacune une borne positive (13) et une borne négative (14), le module de câblage de batterie (10) comprenant :
une barre omnibus (17) qui est composée en métal et présente une paire de parties de branchement destinées à être branchées respectivement sur la borne positive (13) de l'une des cellules de battérie (11) et la borne négative (14) d'une autre des cellules de battérie (11) ; et
un élément de retenue de coffret (19) qui est réalisé en résine généralement synthétique ;
**caractérisé par** un coffret de barre omnibus (18) qui est réalisé en résine synthétique résistante au feu et dans lequel la barre omnibus (17) est logée, le coffret de barre omnibus (18) étant retenu par l'élément de retenue de coffret (19).

2. Module de câblage de batterie (10) selon la revendication 1,
dans lequel un élément parmi le coffret de barre omnibus (18) et l'élément de retenue de coffret (19) présente une partie de remplissage des vides (36) qui vient en contact avec l'autre élément parmi le coffret de barre omnibus (18) et l'élément de retenue de coffret (19) afin de supprimer le ballottement entre le coffret de barre omnibus (18) et l'élément de retenue de coffret (19) lorsque le coffret de barre omnibus (18) est retenu par l'élément de retenue de coffret (19), la partie de remplissage des vides (36) se projetant depuis un élément parmi le coffret de barre omnibus (18) et l'élément de retenue de coffret (19) vers l'autre élément parmi le coffret de barre omnibus (18) et l'élément de retenue de coffret (19).

3. Module de câblage de batterie (10) selon la revendication 2,
dans lequel la partie de remplissage des vides (36) a la forme d'une nervure qui s'étend le long d'une direction de fixation dans laquelle le coffret de barre omnibus (18) est fixé à l'élément de retenue de coffret (19).

4. Module de câblage de batterie (10) selon une quelconque des revendications 1 à 3,
dans lequel la paire de parties de branchement est une paire de trous débouchants qui sont formés afin de pénétrer dans la barre omnibus (17) et dans chacun desquels la borne positive (13) ou la borne négative (14) est insérée, et l'un trous débouchants ou les deux formant la paire sont formés pour s'étendre de manière allongée dans une direction dans laquelle la cellule de battérie (11) et l'autre cellule de battérie (11) qui sont branchées par la barre omnibus (17) sont agencées.

5. Module de câblage de batterie (10) selon une quelconque des revendications 1 à 4,
dans lequel l'élément de retenue de coffret (19) présente une paroi inférieure (28), la paroi inférieure (28) présente une partie de verrou (34) qui est formée au niveau d'un emplacement dans un bord latéral de la paroi inférieure (28), et le coffret de barre omnibus (18) est retenu par l'élément de retenue de coffret (19) suite à la partie de verrou (34) et à une partie de réception de verrou (26) formée sur le coffret de barre omnibus (18) qui s'engagent élastiquement l'une avec l'autre.
